# EUROPÄISCHE PATENTSCHRIFT

(11) **EP 3 464 035 B1**
(45) Veröffentlichungstag und Bekanntmachung des Hinweises auf die Patenterteilung: **02.09.2020**
(21) Anmeldenummer: 17723239.4
(22) Anmeldetag: 27.04.2017
(51) Int. Cl.: B62J 1/00, B62J 1/08

(54) **TELESKOPIERBARE SATTELSTÜTZE**
TELESCOPIC SEAT POST
TIGE DE SELLE TÉLESCOPIQUE

(30) Priorität: 06.06.2016 AT 505132016
(43) Veröffentlichungstag der Anmeldung: 10.04.2019
(73) Patentinhaber: Lupaan GmbH, 4020 Linz (AT)
(72) Erfinder: EBERLBERGER, Lukas, 4470 Enns (AT)
(74) Vertreter: Torggler & Hofinger Patentanwälte
(86) Internationale Anmeldenummer: PCT/AT2017/060109
(87) Internationale Veröffentlichungsnummer: WO 2017/210710

(56) Entgegenhaltungen:
- EP-A1- 1 927 538
- EP-A1- 2 574 799
- WO-A1-93/23281
- CN-U- 204 368 374
- FR-A1- 2 952 031
- US-A1- 2011 257 848
- US-B1- 6 220 581

## Beschreibung

Die Erfindung betrifft eine teleskopierbare Sattelstütze, insbesondere zur Befestigung in einem Sattelrohr eines Fahrrades mit den Merkmalen des Oberbegriffs des Anspruchs 1. Weiters soll ein Fahrrad mit einer erfindungsgemäßen teleskopierbaren Sattelstütze angegeben werden.

Teleskopierbare Sattelstützen zählen bereits zum Stand der Technik und werden beispielsweise in der EP 228004068 A2 gezeigt. Problematisch bei Sattelstützen, welche durch den Stand der Technik gezeigt werden, ist die Grundeinstellung dieser Sattelstützen wie die Anpassung an die Größe des Fahrradfahrers. Anatomische Unterschiede bei Fahrradfahrern machen es erforderlich, dass die Sattelstütze angepasst werden muss. Unterschiede, wie z. B. die Körpergröße oder auch die Schrittlänge des Fahrradfahrers machen es nicht nur notwendig, einen entsprechenden Fahrradrahmen mit der geeigneten Dimension, sondern auch eine geeignet dimensionierte Sattelstütze zu verwenden. Zudem ist je nach Einsatzbereich und Typ des Fahrrades eine Anpassung der Grundeinstellung der Sattelstütze notwendig. Eines der wesentlichen Probleme bei der Integration einer variablen teleskopierbaren Sattelstütze in einem Fahrradrahmen ist die Einstellung der oberen und untersten Sattelposition. Kann die Sattelstütze nicht entsprechend angepasst werden, muss mit Einbußen hinsichtlich Leistung, Komfort und Effizienz eines Radfahrers gerechnet werden. Zudem steigert sich das Verletzungsrisiko bei einem in der Geometrie falsch angepassten Fahrrads enorm. Es ist zwar möglich, mit variablen, teleskopierbaren Sattelstützen während der Fahrt den Sattel entsprechend anheben oder absenken zu können - dies erfolgt jedoch meist in einer konstruktiv durch die Sattelstütze vorgegebenen, eigeschränkten Form und Regulierweite. Der Systemhub der Sattelstütze ist oftmals nicht variierbar vorgegeben. Falls solche Einstellungsmöglichkeiten zur Grundeinstellung vorgesehen sein sollten, können diese Einstellungen nicht ohne hohen Aufwand an der Sattelstütze vorgenommen werden. Hierzu bedarf es eines Fachmannes oder eines Mechanikers, der diese Einstellungen vornimmt. Dabei sind auch in manchen Fällen konstruktive Änderungen an der teleskopierbaren Sattelstütze notwendig. Um unterschiedliche Körpergrößen abdecken zu können, werden auch unterschiedliche teleskopierbare Sattelstützen vom gleichen Typ produziert, deren Länge und/oder Regulierweite unterschiedlich sind.

Die WO 93/23281 offenbart die Merkmale des Oberbegriffs des Anspruchs 1, und betrifft eine teleskopierbare Sattelstütze, bei der eine im Inneren eines Trägerrohrs angeordnete Steuerstange ein Ventil angesteuert. Wird dieses Ventil geöffnet, wird der Sattel von einer Gasfeder und einer Hubstange nach oben gedrückt. Bei der in dieser Schrift gezeigten Sattelstütze handelt es sich um eine herkömmliche Sattelstütze, die ebenfalls die eingangs erwähnten Probleme mit sich bringt. Dies gilt auch für die in der US 6220581 und FR 2952031 gezeigten teleskopierbaren Sattelstützen.

Aufgabe der Erfindung ist es, die vorbeschriebenen Nachteile zu vermeiden und eine gegenüber dem Stand der Technik verbesserte teleskopierbare Sattelstütze und ein gegenüber dem Stand der Technik verbessertes Fahrrad mit einer erfindungsgemäßen teleskopierbaren Sattelstütze anzugeben.

Dies wird bei der erfindungsgemäßen teleskopierbaren Sattelstütze durch die Merkmale des Kennzeichens des Anspruchs 1 und durch ein Fahrrad mit einer erfindungsgemäßen teleskopierbaren Sattelstütze mit den Merkmalen des Anspruchs 14 erreicht.

Wenn ein entlang der Kolbenstange und entlang dem Teleskopsegment in Richtung der Längsachse verschiebbares Zwischenelement vorgesehen ist, welches in seiner Position entlang der Längsachse an der Kolbenstange lösbar befestigt ist und unabhängig von der Position an der Kolbenstange in seiner Position entlang der Längsachse des Teleskopsegmentes lösbar befestigbar ist, so können zwei wesentliche Grundeinstellungen an der teleskopierbaren Sattelstütze vorgenommen werden. Zum einen ist die Maximalhöhe der Sattelstütze einstellbar, welche sich in der Höhe des Fahrradsattels widerspiegelt. Diese Maximalhöhe ist die Höhe, welche bei einer maximal ausgefahrenen teleskopierbaren Sattelstütze erreicht wird. Die zweite Grundeinstellung ist der sogenannte Systemhub der teleskopierbaren Sattelstütze. Dabei wird die unterste Stellung und auch die oberste Stellung der teleskopierbaren Sattelstütze festgelegt. In anderen Worten kann der genannte Regelbereich der teleskopierbaren Sattelstütze eingestellt werden. Kleinere Personen oder Personen mit einer kürzeren Beinlänge benötigen keinen langen Systemhub an einer Sattelstütze. Bei größeren Personen benötigt man einen längeren Systemhub, um z. B. die längere Beinlänge kompensieren zu können. Weiters ist es somit nicht erforderlich, verschieden lange teleskopierbare Sattelstützen zu produzieren und zu vertreiben, da eine teleskopierbare Sattelstütze mit diesen oben genannten Verstellmöglichkeiten sämtliche Bedürfnisse des Fahrradfahrers oder der Fahrradfahrerin abdecken würde. Konstruktive Änderungen an der teleskopierbaren Sattelstütze sind nicht notwendig. Durch eine einfache Einstellung, welche der Fahrradfahrer oder die Fahrradfahrerin sogar selbst vornehmen kann, kann die teleskopierbare Sattelstütze auf die eigenen Bedürfnisse hinsichtlich anatomischer Eigenschaften und auch Fahrweise angepasst werden. Nach der Einstellung dieser Grundeinstellungen (Maximalhöhe, Systemhub) ist die teleskopierbare Sattelstütze in dem Bereich der vorher vorgenommenen Grundeinstellung variabel verstellbar, was über z. B. Remote (Knopfdruck vom Fahrradlenker) aus erfolgen kann. In anderen Worten wird die Grundeinstellung (Maximalhöhe des Sattels, Systemhub des Sattels) eingestellt und im Anschluss kann regulär über Knopfdruck im Bereich dieser vorher vorgenommenen Einstellung die Sattelstütze individuell nach oben und nach unten gefahren bzw. in beliebigen Zwischenpositionen verrastet werden.

Wenn die lösbare Befestigung des Zwischenelementes an der Kolbenstange über zumindest ein Sperrelement folgt, wobei das Sperrelement am Zwischenelement befestigt ist oder zumindest teilweise durch das Zwischenelement ausgebildet wird, so kann über diese lösbare Befestigung des Zwischenelements an der Kolbenstange eine Grundeinstellung hinsichtlich der Maximalhöhe und des Systemhubs der Sattelstütze erfolgen.

Wenn das Sperrelement zumindest teilweise ringförmig ausgebildet ist und die Kolbenstange zumindest abschnittsweise umgreift und das Sperrelement durch Klemmwirkung mit der Kolbenstange reibschlüssig, formschlüssig oder kraftschlüssig lösbar befestigbar ist, so kann mittels einfachem Öffnen oder Schließen des Sperrelementes die Position des Sperrelementes entlang der Kolbenstange eingestellt werden. Beispielsweise wird das Sperrelement geöffnet und entlang der Kolbenstange versetzt. Hierzu kann z. B. das Sperrelement festgehalten werden und die Kolbenstange entlang des Sperrelementes verschoben werden oder umgekehrt. Nach der Auswahl der gewünschten Position wird das Sperrelement geschlossen und setzt sich reibschlüssig, formschlüssig oder kraftschlüssig mit der Kolbenstange in Verbindung.

Wenn die lösbare Befestigung des Zwischenelementes am Teleskopelement über zumindest ein am Zwischenelement angeordnetes, vorzugsweise quer zur Längsachse bewegliches, Rastelement erfolgt, welches in eine korrespondierende, sich entlang der Längsachse im Inneren des Teleskopsegments erstreckende Rastung einrastbar ist, so kann die Position des Teleskopsegementes relativ zur Kolbenstange eingestellt werden. Die Einstellung des Teleskopelementes relativ zum Zwischenelement erfolgt dabei unabhängig von der Einstellung der Position des Zwischenelementes zur Kolbenstange. In anderen Worten kann das Zwischenelement zur Kolbenstange durch eine andere Art der Befestigung erfolgen als die Befestigung zwischen Teleskopsegment zu Zwischenelement. Die Einstellungen sind unabhängig voneinander durchführbar. Durch die formschlüssige Verbindung zwischen Teleskopelement und Zwischenelement entsteht eine stabile, jedoch lösbare Verriegelung der gewünschten Position.

Wenn die lösbare Verbindung zwischen Zwischenelement und Teleskopelement formschlüssig erfolgt, entsteht eine stabile Verbindung zwischen dem Zwischenelement und dem Teleskopelement. Das Zwischenelement ist lösbar mit der Kolbenstange verbunden, die Kolbenstange ist mit dem Sattelrohr des Fahrrades verbunden. Durch diese Verbindung entsteht ein stabiles System, welches jedoch in seiner Länge variabel ist.

Wenn das Teleskopsegment zumindest ein sich entlang der Längsachse erstreckendes Führungselement, vorzugsweise in Form einer Nut, aufweist, wobei zumindest eine an dem Zwischenelement angeordnete oder durch das Zwischenelement ausgebildete Verdrehsicherung mit dem Führungselement in Wirkverbindung steht und ein Verdrehen des Zwischenelementes um die Längsachse verhinderbar ist, so entsteht ein rotationsstabiler Teil des Zwischenelementes, der für die Verstellung des Zwischenelementes relativ zum Teleskopsegment nutzbar ist. Das Rastelement ist dabei beweglich an diesem rotationsstabilen Bereich des Zwischenelementes gelagert. Bei der Verstellung des Rastelements wird somit verhindert, dass sich der rotationsstabile Teil des Zwischenelementes verstellt oder mitbewegt. Durch die Relativbewegung des Rastelements relativ zum rotationsstabilen Teil des Zwischenelementes wird das Ausrasten und das Einrasten des Rastelementes in die korrespondierende Rasterung ermöglicht.

Wenn das Zwischenelement eine relativ zur zumindest einen Verdrehsicherung bewegliche Rastvorrichtung aufweist, wobei bei einer Bewegung der Rastvorrichtung relativ zur zumindest einen Verdrehsicherung das zumindest eine Rastelement in die korrespondierende Rasterung einrastbar oder ausrastbar ist, so wird über die Verstellung der Rastvorrichtung relativ zur Verdrehsicherung das Bewegen des zumindest einen Rastelementes ermöglicht. Diese Bewegung erfolgt dabei indirekt und kann z. B. über eine mechanische Verbindung, welche mit der Rastvorrichtung kontaktiert und in einen zugänglichen Bereich der teleskopierbaren Sattelstütze führt, vorgenommen werden. Es ist somit möglich, die Grundeinstellung zwischen dem Zwischenelement und dem Teleskopsegment von außen durchzuführen, zudem ohne ein Zerlegen der teleskopierbaren Sattelstütze. Die Verdrehsicherung bietet dabei die notwendige Gegenkraft, um ein Verstellen der Rastvorrichtung zu ermöglichen.

Wenn die Verstellung der Position des Zwischenelementes entlang und relativ zur Kolbenstange und/oder die Verstellung der Position des Zwischenelementes entlang und relativ zum Teleskopsegment durch ein am in Einbaulage an einem oberen Ende des Teleskopelements befindliches Betätigungselement durchführbar ist, so kann die Verstellung der gewünschten Grundeinstellungen einfach von außen erfolgen, ohne die teleskopierbare Sattelstütze vom Fahrradrahmen zu entfernen oder auch zerlegen zu müssen. Diese Verstellungen können notfalls auch im Gelände oder im Zuge des Betriebs des Fahrrades durchgeführt werden, eine Werkstatt mit besonderer Ausstattung oder Spezialwerkzeug werden hierzu nicht benötigt. Hierzu ist es auch notwendig, dass die Verdrehung der Rastvorrichtung relativ zur Verdrehsicherung durch das Betätigungselement durchführbar ist, wobei das Betätigungselement mechanisch mit der Rastvorrichtung verbunden ist. Weiters kann es erforderlich sein, dass das Öffnen und Schließen des zumindest einen Sperrelements durch das Betätigungselement durchführbar ist, wobei das Betätigungselement mechanisch mit dem zumindest einen Sperrelement verbunden ist. Über diese mechanischen Verbindungen zwischen Sperrelement und Rastvorrichtung und dem Betätigungselement ist es möglich, über das Betätigungselement beide Grundeinstellungen (Maximalhöhe der Sattelstütze, Systemhub) durchzuführen. Beide Grundeinstellungen werden über ein Betätigungselement ausgeführt. Dabei hat es sich als vorteilhaft herausgestellt, dass die mechanische Verbindung zwischen dem Betätigungselement und der Rastvorrichtung und/oder dem Sperrelement über ein um die Längsachse verstellbares Stellrohr herstellbar ist, wobei das Stellrohr sich im Hohlraum des Teleskopelementes entlang der Längsachse erstreckt. Über dieses Stellrohr wird eine Verlängerung zwischen der Rastvorrichtung und/oder dem Sperrelement und dem Betätigungselement hergestellt. Das Betätigungselement kann somit beabstandet vom Sperrelement und/oder der Rastvorrichtung an der teleskopierbaren Sattelstütze angeordnet sein. Der darin liegende Vorteil ist der, dass das Betätigungselement in einer leicht zu erreichenden Stelle der teleskopierbaren Sattelstütze angeordnet sein. Die Verstellung der Grundeinstellungen kann somit in einer für den Fahrer / der Fahrerin angenehmen Position erfolgen und muss nicht in einer Zwangslage geschehen. Zudem kann das Betätigungselement an einer Stelle der teleskopierbare Sattelstütze angeordnet sein, welche nicht stark durch Umwelteinflüsse beeinträchtigt wird. Zudem können über das Stellrohr zum einen indirekt die Verstellung des Zwischenelementes entlang der Kolbenstange unter Aufhebung der Verbindung zwischen Sperrelement und Kolbenstange durchgeführt werden und zum anderen auch zusätzlich die Verstellung des Zwischenelementes relativ zum Teleskopelement. Ein Betätigungselement ist somit für beide Varianten der Verstellung vorgesehen. Ein Öffnen oder Zerlegen der Sattelstütze zur Verstellung des Zwischenelementes relativ zur Kolbenstange ist nicht notwendig, da die Verstellung von außen erfolgen kann.

Wenn durch ein Befestigungsmittel ein Befestigungsabschnitt des Kraftspeichers mit dem Sattelrohr eines Fahrradrahmens verbindbar ist, wobei das Teleskopelement mit der Kolbenstange des Kraftspeichers verbunden ist, wobei in Einbaulage der teleskopierbaren Sattelstütze im Fahrradrahmen das Teleskopsegment aus dem oberen Ende des Sattelrohres entlang einer Längsachse verstellbar herausragt, wobei in der Einbaulage am oberen Ende des Teleskopsegmentes ein Fahrradsattel befestigbar ist, so entsteht eine kompakte, teleskopierbare Sattelstütze, welche mit zum Stand der Technik relativ wenigen Einzelelementen aufgebaut werden kann. Es entfallen zusätzliche Rohre, welche zur Führung des Teleskopelementes benötigt werden, da auf ein bereits an jedem Fahrradrahmen bestehendes Sattelrohr zur Führung des Teleskopelementes zurückgegriffen wird. Die Einstellungen von Position und Hub des Teleskopelementes können über nur ein Verbindungselement zwischen dem Teleskopelement und der Kolbenstange erfolgen.

Der Kraftspeicher hat dabei die Aufgabe, die Kolbenstange auszufahren, sobald diese für die Bewegung freigegeben wird. Diese Freigabe erfolgt über einen Remote (Schalter) vom Lenker des Fahrrades aus oder von einer anderen günstigen Stelle am Fahrradrahmen. An der Kolbenstange ist dabei das Zwischenelement befestigt, welches gleichzeitig auch indirekt mit der Innenfläche der Sattelstütze befestigt ist. Dieses Zwischenelement überträgt die Kraft des Kraftspeichers ausgehend von der Kolbenstange auf die Sattelstütze und schiebt diese nach oben bis zur obersten Position, sofern nicht dazwischen in einer Zwischenposition eingerastet werden sollte. Dieses Zwischenelement dient zusätzlich auch der Einstellung der obersten Position der Sattelstütze und zudem kann damit auch der Systemhub der Sattelstütze reduziert werden. Die Einstellung der obersten Position wird erreicht, indem das Zwischenelement entlang der Längsachse der Sattelstütze an verschiedenen Positionen befestigt werden kann. Eine Reduzierung des Systemhubes wird erreicht, indem das Zwischenelement entlang der Längsachse der Kolbenstange in Richtung des Stützelementes oder der Kraftquelle verschoben und an der gewünschten Stelle befestigt wird. Das Zwischenelement dient dabei als Anschlag am Stützelement. Wenn das Zwischenelement entlang der Kolbenstange näher am Stützelement bzw. an der Kraftquelle befestigt ist, wird der Hub reduziert, da das Zwischenelement früher anschlägt. Dies wird erreicht, indem über das Betätigungselement eine Maximalhöhe des oberen Endes des Teleskopsegmentes relativ zum Fahrradrahmen herstellbar ist und/oder über das Betätigungselement der Systemhub zwischen der untersten Stellung des oberen Endes des Teleskopsegmentes und der obersten Stellung des oberen Endes des Teleskopsegmentes relativ zum Fahrradrahmen herstellbar ist.

Weitere Einzelheiten und Vorteile der vorliegenden Erfindung werden anhand der abhängigen Ansprüche näher erläutert.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: teleskopierbare Sattelstütze (Schnittdarstellung),
- Fig. 2-4: Zwischenelement (geschlossen),
- Fig. 5: Zwischenelement in Teleskopelement (geschlossen),
- Fig. 6+7: verschiedene Ansichten des Zwischenelementes (geöffnet),
- Fig. 8+9: verschiedene Ansichten des Zwischenelementes entlang des Teleskopelements verschiebbar,
- Fig. 10-13: teleskopierbare Sattelstütze mit Stellrohr (geschlossener Zustand),
- Fig. 14-17: teleskopierbare Sattelstütze mit Stellrohr (Verstellung Kolbenstange),
- Fig. 18-21: teleskopierbare Sattelstütze mit Stellrohr (Verstellung Teleskopelement),
- Fig. 22-25: Einstellvarianten des Hubs und der Einstellhöhe,
- Fig. 26-29: Verstellung des Hubs und der Einstellhöhe ohne Stellrohr,
- Fig. 30+31: verschiedene Stellungen des Zwischenelementes relativ zum Teleskopelement und
- Fig. 32: teleskopierbare Sattelstütze an einem Fahrrad.

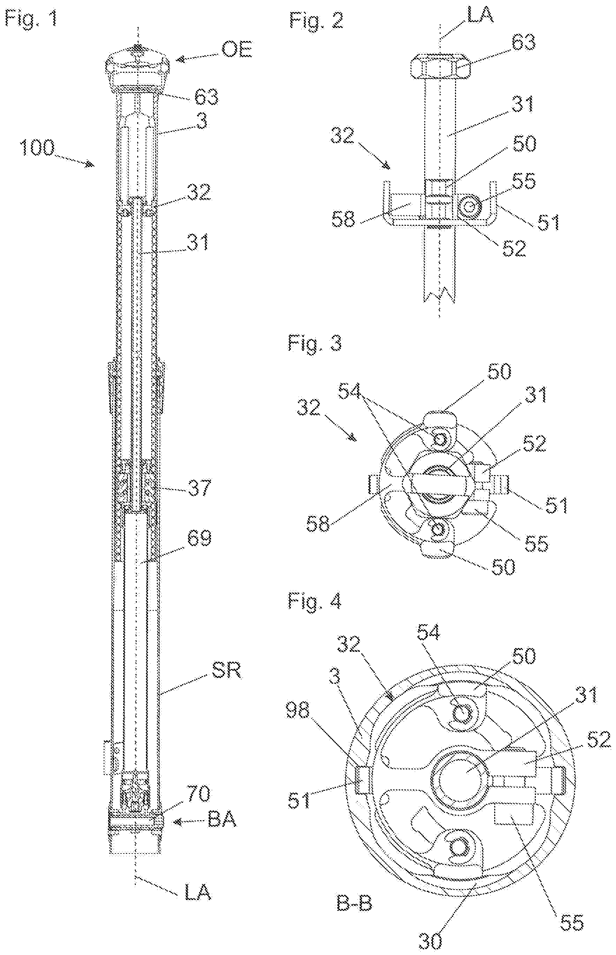

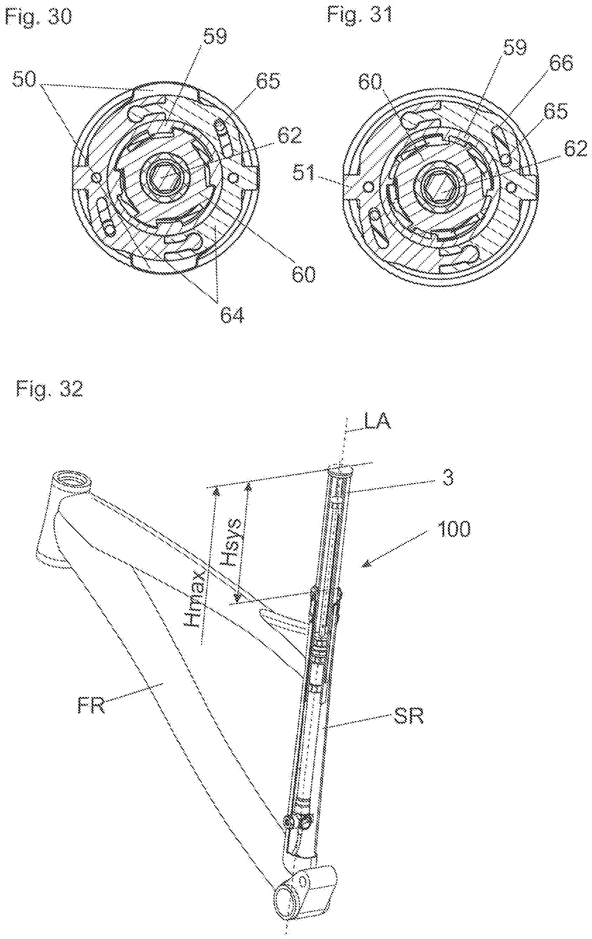

Fig. 1 zeigt eine teleskopierbare Sattelstütze 100 mit einem oberen Ende OE, welches durch das Teleskopelement 3 ausgebildet wird. Am oberen Ende OE wird in weiterer Folge ein Fahrradsattel befestigt, welcher zur Vereinfachung der Zeichnung weggelassen wurde. Im Inneren des Teleskopelementes 3 verläuft entlang seiner Längsachse LA ein Hohlraum. In diesem Hohlraum verläuft entlang der Längsachse LA die Kolbenstange 31 des Kraftspeichers 69. Der Kraftspeicher 69 ist durch ein Befestigungsmittel 70 an seinem Befestigungsabschnitt BA mit dem Sattelrohr SR des Fahrrades FR verbunden (siehe Fig. 32). Wird die Kolbenstange 31 des Kraftspeichers 69 ein- oder ausgefahren, wird die Position des Teleskopelementes 3 relativ zum Sattelrohr SR verstellt. Diese Verstellung am Kraftspeicher 69 erfolgt durch einen Remote (Schalter) an einem geeigneten Platz des Fahrrades FR - vorzugsweise am Lenker. Das Remote (Schalter) ist via Bowdenzug oder einem anderen Mittel zur Kraftübertragung oder auch via Funkverbindung mit der Sattelstütze 100 verbunden. Das Verriegeln der Position, welche über das Remote vorgewählt werden kann, erfolgt über das Öffnen und Schließen der Rasterung am Führungselement 37. Das Öffnen und Schließen der Rasterung am Führungselement 37 entlang des Teleskopelementes 3 hat jedoch nur passiv mit der Grundeinstellung der teleskopierbaren Sattelstütze 100 zu tun. Die Verstellung des Teleskopelementes 3 über das Remote zum Absenken und Anheben der teleskopierbaren Sattelstütze 100 im Betrieb des Fahrrades FR ist Stand der Technik. Das Zwischenelement 32 ist an der Kolbenstange 31 lösbar befestigbar und unabhängig von der Befestigungsposition an der Kolbenstange 31 in seiner Position entlang der Längsachse LA des Teleskopsegmentes 3 lösbar befestigbar. Die Grundeinstellung kann über das Betätigungselement 63 erfolgen. Es ist jedoch auch denkbar, dass nur eine der Einstellungen (Maximalhöhe oder Systemhub) über das Betätigungselement 63 einstellbar ist. Für weitere Einstellungen kann es sein, dass z. B. das Teleskopelement 3 relativ zur Kolbenstange 31 in eine Position gefahren werden muss, um auf das Zwischenelement 32 von außen zugreifen zu können. Das Zwischenelement 32 ist mit der Kolbenstange 31 lösbar befestigt. Diese Verbindung kann reibschlüssig, formschlüssig oder kraftschlüssig ausgeführt werden. Auf diese Weise kann der Hub der Kolbenstange 31 relativ zum Sattelrohr SR eingestellt werden. Wird das Zwischenelement 32 näher am Führungselement 37 platziert, reduziert sich der Systemhub Hsys, da dieser somit früher an diesem anschlägt. Wird das Zwischenelement 32 vom Führungselement 37 entfernt platziert, vergrößert sich der Systemhub Hsys, da das Zwischenelement 32 erst nach einer längeren Strecke entlang der Längsachse LA am Führungselement 37 anschlägt. Das Zwischenelement 32 dient auch zur Einstellung der obersten Position des Teleskopelements 3. Dies geschieht durch eine Verschiebung und darauffolgenden Befestigung des Zwischenelementes 32 relativ zum Teleskopelement 3. Das Zwischenelement 32 kann reibschlüssig oder formschlüssig an verschiedenen Positionen entlang der Längsachse LA des Teleskopelementes 3 befestigt werden.

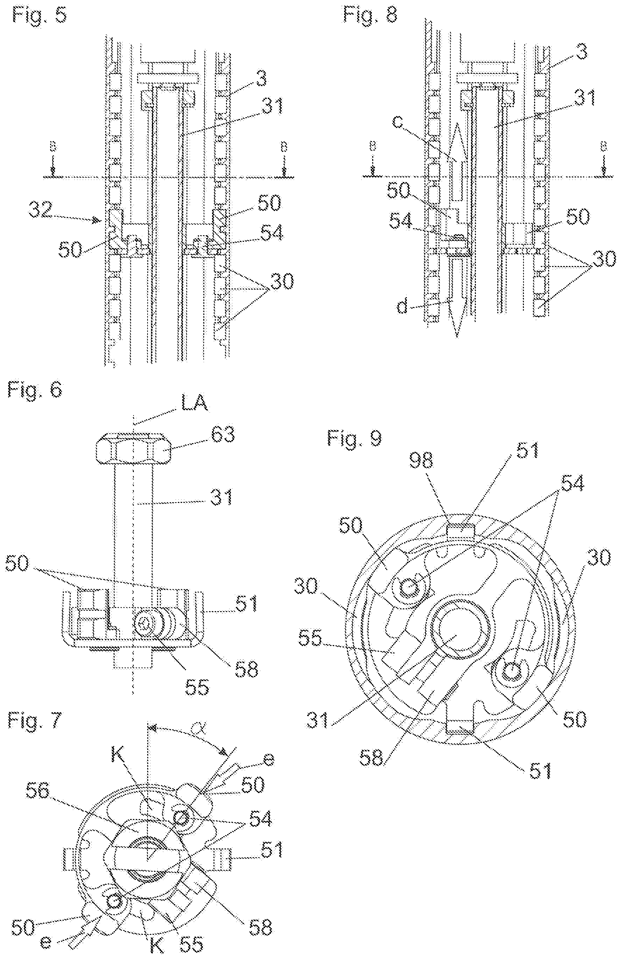

Fig. 2 und Fig. 3 zeigen das Zwischenelement 32, bestehend aus einem gefederten Rastelement 58 und dem Sperrelement 52. Das Sperrelement 52 ist in diesem Fall reibschlüssig mit der Kolbenstange 31 verbindbar. Durch ein Lösen der Schraube 55 wird die reibschlüssige Verbindung zwischen dem Zwischenelement 32 und der Kolbenstange 31 aufgehoben, wobei sich das Zwischenelement 32 entlang der Längsachse LA an der Kolbenstange 31 verschieben lässt. Das Zwischenelement 32 weist an zwei Stellen vertikale Verdrehsicherungen 51 auf, welche im Teleskopelement 3 in ein Führungselement 98, vorzugsweise in Form einer Nut, eingreifen, wie in Fig. 4 ersichtlich ist. Diese Nut erstreckt sich entlang der Längsachse LA des Teleskopsegmentes 3. Das Teleskopsegment 3 ist in den Figuren 2 und 3 nicht ersichtlich. Durch eine Drehung der Kolbenstange 31 um die Längsachse LA mit Hilfe des Betätigungselementes 63 wird das zumindest eine Rastelement 50 in Bewegung gesetzt. Dies erfolgt über die Verbindung der Rastelemente 50 mit der Rastvorrichtung 58, welche mit der Kolbenstange 31 in Wirkverbindung steht. Ein Teil des Zwischenelementes 32 ist dabei über die Verdrehsicherung 51 rotationsstabil mit dem Teleskopsegment 3 verbunden - dies erfolgt aufgrund des Führungselementes 98. Ein anderer Teil des Zwischenelementes 32 ist nicht rotationsstabil ausgeführt und verdreht sich beim Verdrehen der Kolbenstange 31 um die Längsachse LA. Dabei wird über die Rastvorrichtung 58, welche mit den Rastelementen 50 in Verbindung steht, das zumindest eine Rastelement 50 in seiner Position verändert. Die Veränderung erfolgt radial in Richtung der Kolbenstange 31. Somit verändert sich der Außendurchmesser des Zwischenelementes 32 aufgrund der Positionsänderung des zumindest einen Rastelementes 50. Das zumindest eine Rastelement 50 greift in die entlang der Längsachse LA befindlichen Rasterungen 30 ein. Wird das zumindest eine Rastelement 50 in seiner Position geändert, wird der Eingriff in die Rasterungen 30 verhindert und das Zwischenelement 32 kann entlang des Teleskopelementes 3 in Richtung der Längsachse LA verschoben werden. Das zumindest eine Rastelement 50 ist dabei über Steuerbolzen 54 mit der Verdrehsicherung 51 verbunden. Die Verdrehsicherung 51 weist Steuerführungen auf, welche bei der Bewegung der Rastvorrichtung 58 relativ zum Zwischenelement 32 eine Positionsänderung der Rastelemente 50 bewirken. Beim Verdrehen der Kolbenstange 31 bewegen sich die Steuerbolzen 54 entlang der Steuerführungen, was zu einer Reduktion des Außendurchmessers des Zwischenelementes 32 führt. Der Abstand der Rastelemente 50 zueinander verringert sich dabei, zudem werden die Rastelemente 50 zusätzlich aus den Rasterungen 30 herausgedreht. Fig. 5 zeigt in einer Schnittdarstellung, wie sich das Zwischenelement 32 im Teleskopelement 3 formschlüssig festsetzt. Die Bewegung des Zwischenelementes 32 entlang der Längsachse LA des Teleskopelementes 3 ist somit verhindert worden.

Fig. 1 bis 5 zeigen, wie die Position der Kolbenstange 31 relativ zum Teleskopelement 3 gesperrt ist.

Fig. 6 zeigt eine verdrehte Rastvorrichtung 58 relativ zur Verdrehsicherung 51. Die Verdrehung erfolgt dabei in einem Winkel a, wie in Fig. 7 ersichtlich. Die Verdrehung erfolgt über das Betätigungselement 63, welches verdrehfest mit der Kolbenstange 31 verbunden ist. Durch die Verdrehung des Betätigungselementes 63 und somit der Kolbenstange 31 wird die Rastvorrichtung 58 in Bewegung gesetzt und das zumindest eine Rastelement 50 verändert seine Position. Die Pfeile e in der Fig. 7 weisen auf die Bewegung der Rastelemente 50 hin. Bei Verdrehung der Rastvorrichtung 58 relativ zur Verdrehsicherung 51 um den Winkel α verringert sich der Abstand der Rastelemente 50 zueinander und das Zwischenelement 32 ist entlang des Teleskopelementes 3 in Richtung der Längsachse LA verschiebbar.

Fig. 9 zeigt, wie sich die Verdrehsicherungen 51 in der Längsnut, dem Führungselement 98 des Teleskopelementes 3 befinden. Das zumindest eine Rastelement 50 greift nicht mehr in die Rasterung 30 ein, was für die Längsverschiebbarkeit im Teleskopelement 3 notwendig ist. Der Winkel α beträgt dabei ca. 45°. Die Verdrehung kann im und/oder gegen den Uhrzeigersinn erfolgen. Das Verdrehen um den Winkel α bewirkt ein Zusammenführen der Rastelemente 50 und somit eine Aufhebung des formschlüssigen Verbundes zwischen Zwischenelement 32 und Teleskopelement 3.

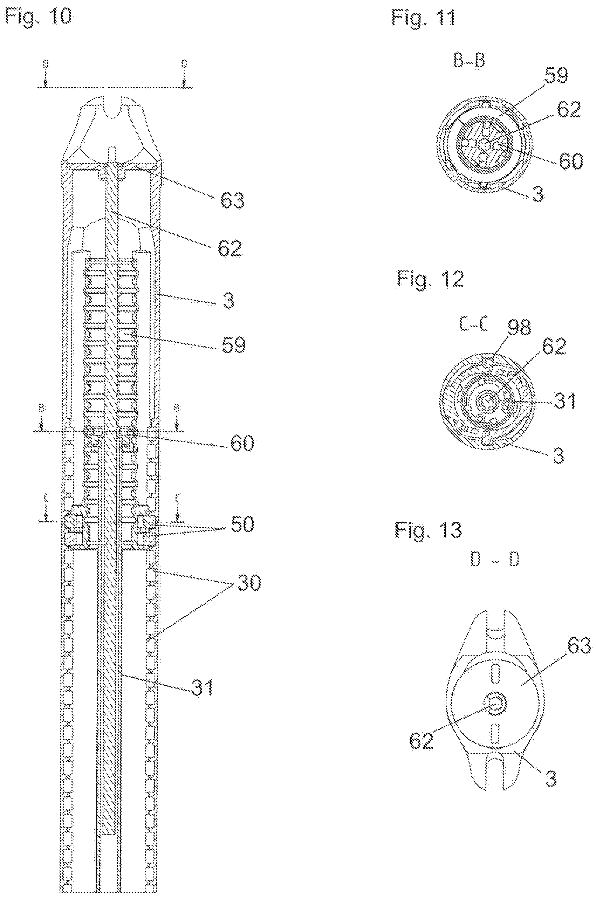

Fig. 10 zeigt eine andere Variante der Verstellung des Systemhubes Hsys und der Maximalhöhe Hmax des Teleskopelementes 3 relativ zum Fahrradrahmen FR (siehe auch Fig. 32). Diese besteht aus dem Teleskopelement 3, einem Stellrohr 59, einem Rotationselement 60, einer Einstellwelle 62, einem Betätigungselement 63 und dem zumindest einen Rastelement 50. Das Stellrohr 59 ist über die Rastelemente 50 formschlüssig mit dem Teleskopelement 3 verbunden. Gleichzeitig ist die Kolbenstange 31 im Stellrohr 59 über das Rotationselement 60 mit dem Stellrohr 59 formschlüssig verbunden. Die Unterseite des Stellrohres 59 dient als Anschlag, welche in der untersten Position am Führungselement 37 (in Fig. 1 dargestellt) anschlägt. Die Einstellung der Maximalhöhe Hmax des Teleskopelementes 3 erfolgt über ein Ausrasten der Rastelemente 50 durch das Rotieren des Stellrohres 59 um die Längsachse LA, in diesem Fall gegen den Uhrzeigersinn. Dabei wirkt die Rotationskraft über die Einstellwelle 62 in Verbindung mit dem Betätigungselement 63 auf das Rotationselement 60 und in weiterer Folge auf das Zwischenrohr 59, welches mitgedreht wird. Die Rotationskraft wird in anderen Worten vor dem Betätigungselement 63 auf das Rotationselement 60 und auf das Zwischenrohr 59 übertragen. Durch diese Rotation werden die Rastelemente 50 radial nach innen bewegt, somit ziehen sich diese aus den Rasterungen 30 und die formschlüssige Verbindung zwischen den Rastelementen 50 und dem Teleskopelement 3 wird aufgehoben, um eine Höhenverstellung vornehmen zu können. Die Fig. 10 weist drei Schnitte auf. Der Schnitt B-B wird in der Fig. 11 gezeigt, der Schnitt C-C wird in Fig. 12 gezeigt und der Schnitt D-D in Fig. 13. Fig. 11 zeigt die rotationsstabile Verbindung zwischen Einstellwelle 62 und dem Rotationselement 60. Fig. 12 zeigt, wie ein Teil des Zwischenelementes 32 über Führungselemente 98 in die Führung des Teleskopelementes 3 eingreifen und somit rotationsstabil gelagert sind. Fig. 13 zeigt das Betätigungselemente 63, welches rotationsstabil mit der Einstellwelle 62 verbunden ist. Das Betätigungselement 63 befindet sich dabei am oberen Ende OE der Sattelstütze 100.

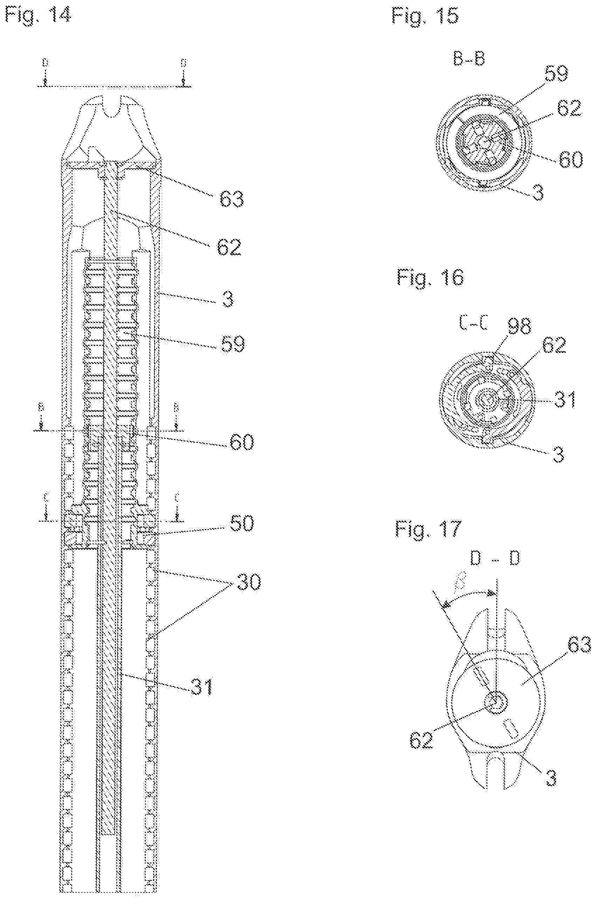

Fig. 14 bis Fig. 17 zeigen den ausgerasteten Zustand des Rotationselementes 60. Durch ein Drehen am Betätigungselement 63 - in diesem Fall gegen den Uhrzeigersinn - wird über die Einstellwelle 62 das damit verbundene Rotationselement 60 verdreht, was die formschlüssigen Verbindungen zwischen dem Zwischenrohr 59 und dem Rotationselement 60 auflöst. In diesem Zustand lässt sich das Rotationselement 60 entlang der Längsachse LA gemeinsam mit der Kolbenstange 31 verschieben und an verschiedenen Punkten entlang des Zwischenrohrs 59 durch ein Zurückdrehen - in diesem Fall im Uhrzeigersinn - des Betätigungselementes 63 wieder fixieren. Durch diese Verstellung der Einrastposition des Rotationselementes 60 mit der Kolbenstange 31 wird eine mögliche Reduktion des Systemhubes Hsys der Kolbenstange 31 und somit auch des Teleskopelementes 3 erreicht. Eine höhere Einrastposition des Rotationselements 60 im Zwischenrohr 59 bewirkt ein früheres Anschlagen des Zwischenrohrs 59 am Führungselement 37. Die Fig. 14 weist die Schnitte B-B, C-C und D-D auf.

In Fig. 15 wird der Schnitt B-B gezeigt, das Rotationselement 60 wurde dabei relativ zum Teleskopelement 3 verstellt. Somit kann das Rotationselement 60 entlang dem Zwischenrohr 59 in seiner Höhe verstellt werden. Das Zwischenrohr 59 selbst jedoch ist im Teleskopelement 3 nach wie vor durch die Rasterungen 30 formschlüssig mit dem Teleskopelement 3 verbunden. Es kann somit lediglich die Position des Rotationselements 60 relativ zur Kolbenstange 31 vorgenommen werden.

Die Fig. 17 zeigt das Betätigungselement 63, wie dieses im Winkel β verstellt worden ist. Der Winkel β ist somit zuständig für die Verstellung des Rotationselementes 60 relativ zur Kolbenstange 31 und somit für den Systemhub Hsys der teleskopierbaren Sattelstütze 100.

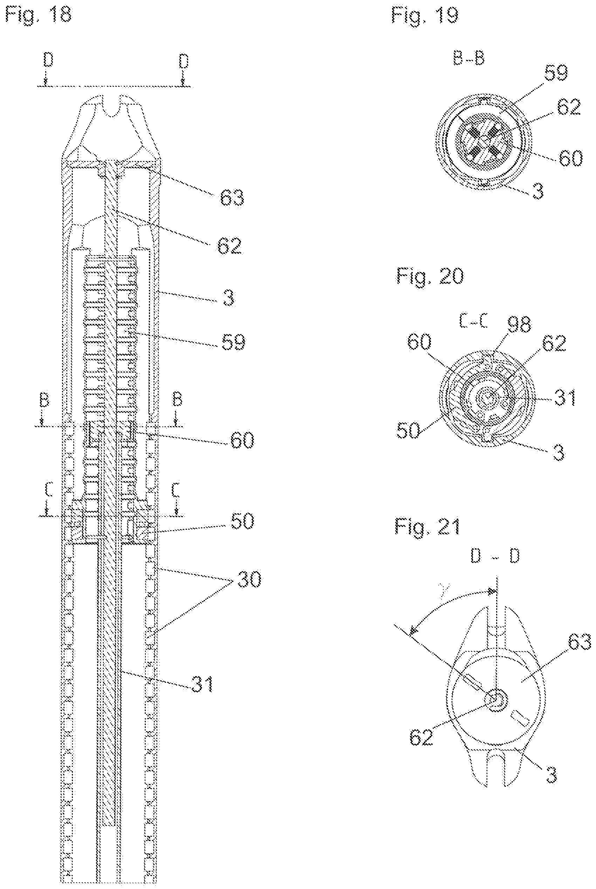

Fig. 18 bis Fig. 21 beschreiben den ausgerasteten Zustand zwischen dem Zwischenrohr 59 und dem Teleskopelement 3. Durch ein Drehen des Betätigungselementes 63 - in diesem Fall gegen den Uhrzeigersinn - in einem Winkel β, wird über die Einstellwelle 62 das verbundene Rotationselement 60 gedreht und die formschlüssige Verbindung zwischen dem Zwischenrohr 59 und dem Rotationselement 60 gelöst. Wird das Betätigungselement 63 jedoch über den Winkel β hinaus - in diesem Fall gegen den Uhrzeigersinn - in einen Winkel y weitergedreht, so dreht sich das Zwischenrohr 59 in der gleichen Richtung mit weiter. Dies bewirkt, dass sich die Rastelemente 50 radial aufeinander zubewegen und sich aus den Rasterungen 30 zurückziehen. Damit wird die formschlüssige Verbindung zwischen dem Teleskopelement 3 und dem Zwischenrohr 59 gelöst. Auf diese Weise lässt sich im Anschluss das Teleskopelement 3 entlang der Längsachse LA verschieben und ist somit in der Höhe verstellbar - es erfolgt die Einstellung der Maximalhöhe Hmax. Durch das Zurückstellen im Uhrzeigersinn des Betätigungselementes 63 rasten die Rastelemente 61 wieder ein. Die Position ist somit in der gewünschten Maximalhöhe Hmax verriegelt.

Fig. 18 ist in drei Schnitte unterteilt - Schnitt B-B wird in Fig. 19 dargestellt, diese zeigt, wie keine Verbindung zwischen den Rasterungen 30 und dem Zwischenrohr 59 mehr hergestellt ist. Detailliert wird dies im Schnitt C-C der Fig. 20 gezeigt. Durch die Führungselemente 98 und die Verdrehung des Rotationselementes 60 wird ein Zusammenziehen der Rastelemente 50 erzielt.

Der formschlüssige Verbund zum Teleskoprohr 3 wird entlang der Längsachse LA somit aufgehoben. Der Schnitt D-D der Fig. 21 zeigt den Winkel γ am Betätigungselement 63, welches verdrehfest mit der Einstellwelle 62 verbunden ist.

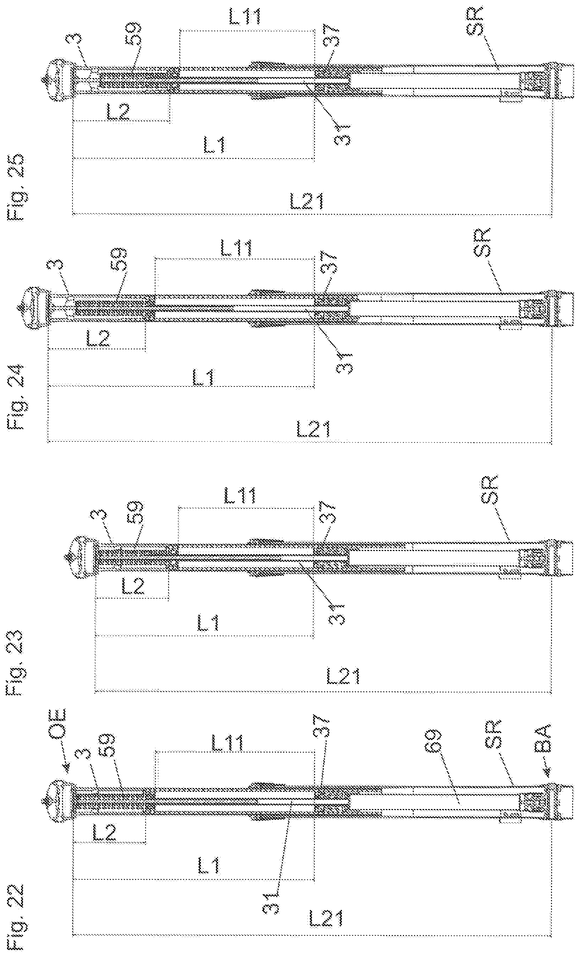

Fig. 22 bis Fig. 25 beschreiben die verschiedenen Einstellvarianten der Maximalhöhe Hmax und des Systemhubs Hsys des Teleskopelements 3 in Zusammenhang mit dem Stellrohr 59 als Verstelleinheit. Das Stellrohr 59 kann relativ zur Kolbenstange 31 und zum Teleskopelement 3 in beide Richtungen verstellt werden und dient somit zur Begrenzung des Systemhubs Hsys und zur Einstellung der Endposition, der Höhe Hmax des Teleskopelements 3. L21 ist die Gesamtlänge des Systems vom Befestigungsabschnitt BA des Kraftspeichers 69 bis hin zum oberen Ende OE des Teleskopelements 3. Die Länge L21 kann nach oben und unten hin variieren, wenn diese an die Körpergröße des Fahrers angepasst werden muss. Bei Absenkung der Teleskopsattelstütze 100 während der Fahrt reduziert sich die Länge L11 bis auf null, wenn das Stellrohr 59 auf dem Führungselement 37 aufsitzt. Die Länge L11 beschreibt den Abstand zwischen dem Führungselement 37 und dem Stellrohr 59. L11 ist der effektive Hub Hsys, den das Teleskopelement 3 bei der Absenkung der Teleskopsattelstütze 100 nach unten verfahren kann. Der Hub Hsys und somit die Länge L11 lässt sich reduzieren, indem die Kolbenstange 31 mit dem Rotationselement 60 an einer höheren Position im Stellrohr 59 eingerastet wird. Eine Hubreduktion verringert auch den Abstand L1.

Die Einstellung der obersten Position oder Maximalhöhe Hmax des Teleskopelements 3 erfolgt über eine Veränderung der Position des Stellrohrs 59 im Teleskopelement 3 entlang der Längsachse LA. Umso höher das Teleskopelement 3 im ausgefahrenen Zustand positioniert sein soll, umso höher ist auch der Abstand L2. Das bedeutet, dass das Stellrohr 59 weiter unten im Teleskopelement 3 arretiert wird.

Fig. 22 bis Fig. 25 zeigen dabei unterschiedliche Stellungen und Einstellmöglichkeiten. Die Positionen der Fig.22 und Fig. 23 zeigen die Arretierung des Stellrohrs 59 in der obersten Position im Teleskopelement 3. Die Länge L2 hat den Mindestwert erreicht und das Teleskopelement 3 kann durch eine Positionsverschiebung des Stellrohrs 59 nicht mehr in eine tiefere Höhe Hmax gebracht werden, um die Länge L1 zu verringern. Dies bedeutet, dass das Teleskopelement 3 nur noch durch eine Reduktion des Hubs L11 in eine tiefere Höhe Hmax gebracht werden könnte, um die Länge L1 zu verringern. Fig. 24 und Fig. 25 zeigen die Arretierung des Stellrohrs 59 in eine tiefere Höhe Hmax im Teleskopelement 3. Dies bedeutet, dass das Teleskopelement 3 in eine höhere Höhe Hmax gebracht worden ist. Die Längen L2 und L1 wurden in gleichem Maße erhöht. Zudem zeigen Fig. 23 und Fig. 25 Einstellungen, bei welchen der Hub Hsys reduziert wurde. D. h., die Kolbenstange 31 wurde innerhalb des Stellrohrs 59 in einer höheren Höhe Hmax arretiert. Dabei wurde der Abstand L11 reduziert. Um bei diesem reduzierten Hub Hsys wieder die höhere Endposition erreichen zu können, muss das Stellrohr 59 weiter unten im Teleskopelement 3 arretiert werden, was den Abstand L2 wiederum erhöht.

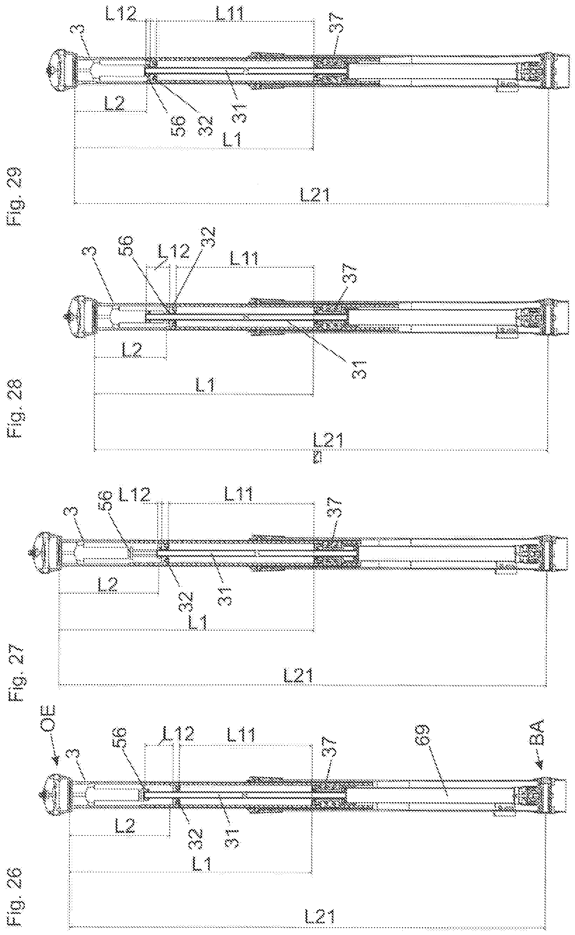

Fig. 26 bis Fig. 29 beschreiben die verschiedenen Einstellvarianten des Systemhubs Hsys und der Einstellhöhe Hmax des Teleskopelements 3 im Zusammenhang mit dem Zwischenelement 32 als Verstelleinheit. Das Zwischenelement 32 kann relativ zur Kolbenstange 31 und zum Teleskopelement 3 in beide Richtungen der Längsachse LA verstellt werden und dient somit zur Begrenzung des Systemhubs Hsys und zur Einstellung der Endposition oder Maximalhöhe Hmax des Teleskopelements 3. L21 ist die Gesamtlänge des Systems vom Befestigungsabschnitt BA zur Befestigung im Sattelrohr SR eines Fahrradrahmens FR bis hin zum oberen Ende OE des Teleskopelementes 3. Die Länge L21 kann nach oben und unten hin variieren, wenn diese an die Körpergröße eines Fahrers angepasst werden muss. Bei Absenkung der teleskopierbaren Sattelstütze 100 während der Fahrt, reduziert sich die Länge L11 bis auf Null, wenn das Zwischenelement 32 auf dem Führungselement 37 aufsitzt. Die Länge L11 beschreibt den Abstand zwischen dem Führungselement 37 und dem Verbindungselement 32. L11 ist der effektive Hub Hsys, den das Teleskopelement 3 nach unten verfahren kann, wenn die Teleskopsattelstütze 100 abgesenkt werden soll. Der Hub Hsys und somit die Länge L11 lässt sich reduzieren, indem das Zwischenelement 32 an einer tieferen Position entlang der Längsachse LA an der Kolbenstange 31 positioniert wird. Das Zwischenelement 32 schlägt dann nach einem kürzeren Weg entlang der Längsachse LA am Führungselement 37 auf.

Die Einstellung der obersten Position des Teleskopelementes oder der Höhe Hmax erfolgt über eine Veränderung der Position des Zwischenelementes 32 entlang der Längsachse LA im Teleskopelement 3. Umso höher das Teleskopelement 3 im ausgefahrenen Zustand positioniert sein soll, umso größer wird auch der Abstand L2 gewählt. Dies bedeutet, dass das Zwischenelement 32 weiter unten im Teleskopelement 3 arretiert wird.

Fig. 26 und Fig. 27 zeigen die Arretierung des Zwischenelementes 32 in einer tieferen Arretierungsposition oder Höhe Hmax im Teleskopelement 3. Dies bedeutet, dass die Sattelstütze 100 in einer höheren obersten Höhe Hmax gebracht worden ist. die Längen L2 und L1 wurden im gleichen Maß erhöht.

Die Fig. 28 und Fig. 29 zeigen die Arretierung des Zwischenelementes 32 in der obersten Höhe Hmax im Teleskopelement 3. L2 hat in diesem Fall den Minimalwert erreicht und das Teleskopelement 3 kann hier durch eine Positionsveränderung des Zwischenelementes 32 nicht mehr in eine tiefere höhere Höhe Hmax gebracht werden, um die Länge L1 zu verringern zu können. Dies bedeutet, dass die teleskopierbare Sattelstütze 100 in diesem Punkt nur noch durch eine Reduktion des Systemhubs L11 in eine tiefere Höhe Hmax gebracht werden kann, um den Abstand L1 zu verringern.

Die Fig. 26 und Fig. 28 zeigen Einstellungen, bei welchen der Systemhub Hsys reduziert wurde. Dies bedeutet, dass das Zwischenelement 32 entlang der Längsachse LA an der Kolbenstange 31 weiter unten positioniert worden ist. Der Abstand zum oberen Anschlagelement 56 an der Kolbenstange 31 und dem Zwischenelement 32 (Länge L12) wurden erhöht. Das bewirkt eine Reduktion der Länge L11 und somit einen kürzeren Systemhub Hsys zum Absenken der Teleskopsattelstütze 100. Um bei diesem reduzierten Systemhub Hsys wieder eine höhere Endposition erreichen zu können, müsste das Zwischenelement 32 weiter unten im Teleskopelement 3 arretiert werden, was den Abstand L2 erhöhen würde.

Fig. 27 und Fig. 29 zeigen das Zwischenelement 32 in der obersten Position im Anschlagelement 56. Die Länge L12 ist hier minimal und die Länge L11 maximal. In dieser Einstellung kann der vollständige Systemhub Hsys der Teleskopsattelstütze 100 genützt werden.

Fig. 30 zeigt die Einstellwelle 62, das Rotationselement 60 und die Wirkverbindung mit dem Stellrohr 59. Das Stellrohr 59 wirkt auf die spreizbaren Steuerplättchen 64, was zu einem relativen Bewegen der Rastelemente 50 zueinander führt. Zudem wird erreicht, dass eine Verbindung zwischen Rotationselement 60 und dem Stellrohr 59 lösbar und befestigbar ausgestaltet wird. Beim Verdrehen des Rotationselementes 60 um einen gewissen Winkel werden somit die Rastelemente 50 bewegt und auch die Verbindungen zwischen Stellrohr 59 und Rotationselement 60 aufgehoben. Der aufgehobene Zustand wird in Fig. 31 gezeigt. Die Rastelemente 50 wurden zurückgezogen durch die Verdrehung der Einstellwelle 62 und somit auch durch die Verdrehung des Rotationselementes 60. Zudem ist das Rotationselement 60 entlang der Längsachse LA verfahrbar relativ zum Stellrohr 59 und zur Kolbenstange 31. Die Verstellung der Maximalhöhe Hmax und des Systemhubs Hsys kann somit erfolgen.

Fig. 32 zeigt eine teleskopierbare Sattelstütze 100 in einem Fahrradrahmen eines Fahrrades FR. Anbauteile, wie z.B. Laufräder, Kurbel und Lenker wurden dabei zur Vereinfachung der Zeichnung weggelassen. Entlang der Längsachse LA ist die Sattelstütze 100 variabel verstellbar. Als Grundeinstellwerte sind dabei die Höhe Hmax und der Systemhub Hsys definiert und einstellbar.

## Patentansprüche

1. Teleskopierbare Sattelstütze (100), insbesondere zur Befestigung in einem Sattelrohr (SR) eines Fahrrades (FR), mit
- einem rohrförmig ausgestalteten Teleskopelement (3) mit einer Längsachse (LA) und einem sich entlang der Längsachse (LA) erstreckenden Hohlraum,
- einer sich im Hohlraum des Teleskopelements (3) entlang der Längsachse (LA) erstreckenden Kolbenstange (31),
- einem mit der Kolbenstange (31) verbundenen Kraftspeicher (69) zur Bewegung der Kolbenstange (31) in Richtung der Längsachse (LA),
**dadurch gekennzeichnet, dass** ein entlang der Kolbenstange (31) und entlang dem Teleskopsegment (3) in Richtung der Längsachse (LA) verschiebbares Zwischenelement (32) vorgesehen ist, welches in verschiedenen Positionen entlang der Längsachse (LA) an der Kolbenstange (31) lösbar befestigbar ist und unabhängig von der Position an der Kolbenstange (31) in verschiedenen Positionen entlang der Längsachse (LA) des Teleskopsegments (3) lösbar befestigbar ist.

2. Teleskopierbare Sattelstütze nach Anspruch 1, **dadurch gekennzeichnet, dass** die lösbare Befestigung des Zwischenelementes (32) an der Kolbenstange (31) über zumindest ein Sperrelement (52) erfolgt, wobei das Sperrelement (52) am Zwischenelement (32) befestigt ist oder zumindest teilweise durch das Zwischenelement (32) ausgebildet wird.

3. Teleskopierbare Sattelstütze nach Anspruch 2, **dadurch gekennzeichnet, dass** das Sperrelement (52) zumindest teilweise ringförmig ausgebildet ist und die Kolbenstange (31) zumindest abschnittsweise umgreift und das Sperrelement (52) durch Klemmwirkung mit der Kolbenstange (31) reibschlüssig, formschlüssig oder kraftschlüssig lösbar befestigbar ist.

4. Teleskopierbare Sattelstütze nach einem der Ansprüche 1 bis 3, **dadurch gekennzeichnet, dass** die lösbare Befestigung des Zwischenelementes (32) am Teleskopelement (3) über zumindest ein am Zwischenelement (32) angeordnetes, vorzugsweise quer zur Längsachse (LA) bewegliches, Rastelement (50) erfolgt, welches in eine korrespondierende, sich entlang der Längsachse (LA) im Inneren des Teleskopsegments (3) erstreckende, Rasterung (30) einrastbar ist.

5. Teleskopierbare Sattelstütze nach einem der Ansprüche 1 bis 4, **dadurch gekennzeichnet, dass** die lösbare Verbindung zwischen Zwischenelement (32) und Teleskopelement (3) formschlüssig erfolgt.

6. Teleskopierbare Sattelstütze nach einem der Ansprüche 1 bis 5, **dadurch gekennzeichnet, dass** das Teleskopsegment (3) zumindest ein sich entlang der Längsachse (LA) erstreckendes Führungselement (98), vorzugsweise in Form einer Nut, aufweist, wobei zumindest eine an dem Zwischenelement (32) angeordnete oder durch das Zwischenelement (32) ausgebildete Verdrehsicherung (51) mit dem Führungselement (98) in Wirkverbindung steht und ein Verdrehen des Zwischenelementes (32) um die Längsachse (LA) verhinderbar ist.

7. Teleskopierbare Sattelstütze nach Anspruch 6, **dadurch gekennzeichnet, dass** das Zwischenelement (32) eine relativ zur zumindest einen Verdrehsicherung (51) bewegliche Rastvorrichtung (58) aufweist, wobei bei einer Bewegung der Rastvorrichtung (58) relativ zur zumindest einen Verdrehsicherung (51) das zumindest eine Rastelement (50) in die korrespondierende Rasterung (30) einrastbar oder ausrastbar ist.

8. Teleskopierbare Sattelstütze nach einem der Ansprüche 1 bis 7, **dadurch gekennzeichnet, dass** die Verstellung der Position des Zwischenelementes (32) entlang und relativ zur Kolbenstange (31) und/oder die Verstellung der Position des Zwischenelementes (32) entlang und relativ zum Teleskopsegment (3) durch ein am in Einbaulage an einem oberen Ende (OE) des Teleskopelements (3) befindliches Betätigungselement (63) durchführbar ist.

9. Teleskopierbare Sattelstütze nach Anspruch 8, **dadurch gekennzeichnet, dass** die Verdrehung der Rastvorrichtung (58) relativ zur Verdrehsicherung (51) durch das Betätigungselement (63) durchführbar ist, wobei das Betätigungselement (63) mechanisch mit der Rastvorrichtung (58) verbunden ist.

10. Teleskopierbare Sattelstütze nach Anspruch 8 oder 9, **dadurch gekennzeichnet, dass** das Öffnen und Schließen des zumindest einen Sperrelementes (52) durch das Betätigungselement (63) durchführbar ist, wobei das Betätigungselement (63) mechanisch mit dem zumindest einen Sperrelement (52) verbunden ist.

11. Teleskopierbare Sattelstütze nach einem der Ansprüche 9 oder 10, **dadurch gekennzeichnet, dass** die mechanische Verbindung zwischen dem Betätigungselement (63) und der Rastvorrichtung (58) und/oder dem Sperrelement (52) über ein um die Längsachse (LA) verdrehbares Stellrohr (59) welches sich entlang der Längsachse (LA) der Kolbenstange 31 erstreckt, herstellbar ist, wobei das Stellrohr (59) sich im Hohlraum des Teleskopelements (3) entlang der Längsachse (LA) erstreckt.

12. Teleskopierbare Sattelstütze nach einem der Ansprüche 1 bis 11, **dadurch gekennzeichnet, dass** durch ein Befestigungsmittel (70) ein Befestigungsabschnitt (BA) des Kraftspeichers (69) mit dem Sattelrohr (SR) eines Fahrradrahmens (FR) verbindbar ist, wobei das Teleskopelement (3) mit der Kolbenstange (31) des Kraftspeichers(69) verbunden ist, wobei in Einbaulage der teleskopierbaren Sattelstütze (100) im Fahrradrahmen (FR) das Teleskopsegment (3) aus dem oberen Ende (OE) des Sattelrohres (SR) entlang einer Längsachse (LA) verstellbar herausragt, wobei in der Einbaulage am oberen Ende (OE) des Teleskopsegmentes (3) ein Fahrradsattel befestigbar ist.

13. Teleskopierbare Sattelstütze nach Anspruch 12, **dadurch gekennzeichnet, dass** ein Betätigungselement (63) vorgesehen ist, über das eine Maximalhöhe (Hmax) des oberen Endes (OE) des Teleskopsegmentes (3) relativ zum Fahrradrahmen (FR) und/oder über das Betätigungselement (63) der Systemhub (Hsys) zwischen der untersten Stellung des oberen Endes des Teleskopsegmentes (3) und der obersten Stellung des oberen Endes des Teleskopsegmentes (3) relativ zum Fahrradrahmen (FR) einstellbar ist oder sind.

14. Fahrrad (FR) mit einer teleskopierbaren Sattelstütze nach einem der Ansprüche 1 bis 13.

## Claims

1. Telescopic seat post (100), in particular for fastening in a seat tube (SR) of a bicycle (FR), with
- a telescopic element (3) designed tubular with a longitudinal axis (LA) and a cavity extending along the longitudinal axis (LA),
- a piston rod (31) extending along the longitudinal axis (LA) in the cavity of the telescopic element (3),
- a force accumulator (69) connected to the piston rod (31) for moving the piston rod (31) in the direction of the longitudinal axis (LA),
wherein an intermediate element (32), displaceable along the piston rod (31) and along the telescopic segment (3) in the direction of the longitudinal axis (LA), which is releasably fastenable to the piston rod (31) in different positions along the longitudinal axis (LA) and is releasably fastenable in different positions along the longitudinal axis (LA) of the telescopic segment (3) independently of the position on the piston rod (31), is provided.

2. Telescopic seat post according to claim 1, wherein the releasable fastening of the intermediate element (32) to the piston rod (31) is effected via at least one blocking element (52), wherein the blocking element (52) is fastened to the intermediate element (32) or is formed at least partially by the intermediate element (32).

3. Telescopic seat post according to claim 2, wherein the blocking element (52) is formed at least partially annular and grips around the piston rod (31) at least in portions and the blocking element (52) is releasably fastenable in a friction-locking, positive-locking or force-fitting manner by a clamping action with the piston rod.

4. Telescopic seat post according to one of the claims 1 to 3, wherein the releasable fastening of the intermediate element (32) to the telescopic element (3) is effected via at least one catch element (50), arranged on the intermediate element (32) and preferably movable transverse to the longitudinal axis (LA), which can be latched in a corresponding catch (30) extending along the longitudinal axis (LA) inside the telescopic segment (3).

5. Telescopic seat post according to one of the claims 1 to 4, wherein the releasable connection between intermediate element (32) and telescopic element (3) is effected in a positive-locking manner.

6. Telescopic seat post according to one of the claims 1 to 5, wherein the telescopic segment (3) has at least one guide element (98), preferably in the form of a groove, extending along the longitudinal axis (LA), wherein at least one anti-turn device (51) arranged on the intermediate element (32) or formed by the intermediate element (32) is in operative connection with the guide element (98) and the intermediate element (32) can be prevented from turning about the longitudinal axis (LA).

7. Telescopic seat post according to claim 6, wherein the intermediate element (32) has a catch device (58) that is movable relative to the at least one anti-turn device (51), wherein during a movement of the catch device (58) relative to the at least one anti-turn device (51) the at least one catch element (50) can be latched in or unlatched from the corresponding catch (30).

8. Telescopic seat post according to one of the claims 1 to 7, wherein the adjustment of the position of the intermediate element (32) along and relative to the piston rod (31) and/or the adjustment of the position of the intermediate element (32) along and relative to the telescopic segment (3) can be carried out by an actuating element (63) which is - in the installation position - located at an upper end (OE) of the telescopic element (3).

9. Telescopic seat post according to claim 8, wherein the turning of the catch device (58) relative to the anti-turn device (51) can be carried out by the actuating element (63), wherein the actuating element (63) is mechanically connected to the catch device (58).

10. Telescopic seat post according to claim 8 or 9, wherein the opening and closing of the at least one blocking element (52) can be carried out by the actuating element (63), wherein the actuating element (63) is mechanically connected to the at least one blocking element (52).

11. Telescopic seat post according to claim 9 or 10, wherein the mechanical connection between the actuating element (63) and the catch device (58) and/or the blocking element (52) can be produced via an adjusting tube (59), rotatable about the longitudinal axis (LA), which extends along the longitudinal axis (LA) of the piston rod (31), wherein the adjusting tube (59) extends along the longitudinal axis (LA) in the cavity of the telescopic element (3).

12. Telescopic seat post according to one of the claims 1 to 11, wherein, by a fastening means (70), a fastening portion (BA) of the force accumulator (69) can be connected to the seat tube (SR) of a bicycle frame (FR), wherein the telescopic element (3) is connected to the piston rod (31) of the force accumulator (69), wherein in the installation position of the telescopic seat post (100) in the bicycle frame (FR) the telescopic segment (3) protrudes from the upper end (OE) of the seat tube (SR) adjustably along a longitudinal axis (LA), wherein in the installation position a bicycle seat is fastenable to the upper end (OE) of the telescopic segment (3).

13. Telescopic seat post according to claim 12, wherein a actuating element (63) is provided, through which a maximum height (Hmax) of the upper end (OE) of the telescopic segment (3) relative to the bicycle frame (FR) and/or the system travel (Hsys) between the lowest position of the upper end (OE) of the telescopic segment (3) and the highest position of the upper end (OE) of the telescopic segment (3) relative to the bicycle frame (FR) is or are adjustable.

14. Bicycle (FR) with a telescopic seat post according to one of claims 1 to 13.

## Revendications

1. Tige de selle télescopique (100), en particulier pour la fixation dans un tube de selle (SR) d'une bicyclette (FR), avec
- un élément télescopique (3) configuré en forme de tube avec un axe longitudinal (LA) et un espace creux s'étendant le long de l'axe longitudinal (LA),
- une tige de piston (31) s'étendant dans l'espace creux de l'élément télescopique (3) le long de l'axe longitudinal (LA),
- un accumulateur de force (69) relié à la tige de piston (31) pour le déplacement de la tige de piston (31) en direction de l'axe longitudinal (LA),
**caractérisée en ce qu'**un élément intermédiaire (32) mobile le long de la tige de piston (31) et le long du segment télescopique (3) en direction de l'axe longitudinal (LA) est prévu, lequel peut être fixé de manière amovible dans différentes positions le long de l'axe longitudinal (LA) à la tige de piston (31) et peut être fixé de manière amovible indépendamment de la position à la tige de piston (31) dans différentes positions le long de l'axe longitudinal (LA) du segment télescopique (3).

2. Tige de selle télescopique selon la revendication 1, **caractérisée en ce que** la fixation amovible de l'élément intermédiaire (32) à la tige de piston (31) est effectuée par le biais d'au moins un élément de verrouillage (52), dans laquelle l'élément de verrouillage (52) est fixé à l'élément intermédiaire (32) ou est réalisé au moins partiellement par l'élément intermédiaire (32).

3. Tige de selle télescopique selon la revendication 2, **caractérisée en ce que** l'élément de verrouillage (52) est réalisé au moins partiellement de manière annulaire et entoure la tige de piston (31) au moins par section et l'élément de verrouillage (52) peut être fixé de manière amovible par friction, à complémentarité de formes ou à force par action de serrage avec la tige de piston (31).

4. Tige de selle télescopique selon l'une des revendications 1 à 3, **caractérisée en ce que** la fixation amovible de l'élément intermédiaire (32) à l'élément télescopique (3) est effectuée par au moins un élément d'encliquetage (50) agencé au niveau de l'élément intermédiaire (32), mobile de préférence transversalement à l'axe longitudinal (LA) qui peut être encliqueté dans un tramage (30) correspondant, s'étendant le long de l'axe longitudinal (LA) à l'intérieur du segment télescopique (3).

5. Tige de selle télescopique selon l'une des revendications 1 à 4, **caractérisée en ce que** la liaison amovible entre l'élément intermédiaire (32) et l'élément télescopique (3) est effectuée à complémentarité de formes.

6. Tige de selle télescopique selon l'une des revendications 1 à 5, **caractérisée en ce que** l'élément télescopique (3) présente au moins un élément de guidage (98) s'étendant le long de l'axe longitudinal (LA), de préférence sous la forme d'une rainure, dans laquelle au moins une protection antirotation (51) agencée au niveau de l'élément intermédiaire (32) ou réalisée par l'élément intermédiaire (32) est en liaison active avec l'élément de guidage (98) et une rotation de l'élément intermédiaire (32) autour de l'axe longitudinal (LA) peut être empêchée.

7. Tige de selle télescopique selon la revendication 6, **caractérisée en ce que** l'élément intermédiaire (32) présente un dispositif d'encliquetage (58) mobile par rapport à au moins une protection antirotation (51), dans laquelle lors d'un mouvement du dispositif d'encliquetage (58) par rapport à au moins une protection antirotation (51) l'au moins un élément d'encliquetage (50) peut être encliqueté ou désencliqueté dans le tramage (30) correspondant.

8. Tige de selle télescopique selon l'une des revendications 1 à 7, **caractérisée en ce que** le réglage de la position de l'élément intermédiaire (32) le long de la tige de piston (31) et par rapport à celle-ci et/ou le réglage de la position de l'élément intermédiaire (32) le long du segment télescopique (3) et par rapport à celui-ci peut être réalisé par un élément d'actionnement (63) se trouvant en position de montage à une extrémité supérieure (OE) de l'élément télescopique (3).

9. Tige de selle télescopique selon la revendication 8, **caractérisée en ce que** la rotation du dispositif d'encliquetage (58) par rapport à la protection antirotation (51) peut être réalisée par l'élément d'actionnement (63), dans laquelle l'élément d'actionnement (63) est relié mécaniquement au dispositif d'encliquetage (58).

10. Tige de selle télescopique selon la revendication 8 ou 9, **caractérisée en ce que** l'ouverture et la fermeture d'au moins un élément de verrouillage (52) peuvent être réalisées par l'élément d'actionnement (63), dans laquelle l'élément d'actionnement (63) est relié mécaniquement à l'au moins un élément de verrouillage (52).

11. Tige de selle télescopique selon l'une des revendications 9 ou 10, **caractérisée en ce que** la liaison mécanique entre l'élément d'actionnement (63) et le dispositif d'encliquetage (58) et/ou l'élément de verrouillage (52) peut être établie par un tube de réglage (59) rotatif autour de l'axe longitudinal (LA) qui s'étend le long de l'axe longitudinal (LA) de la tige de piston (31), dans laquelle le tube de réglage (59) s'étend dans l'espace creux de l'élément télescopique (3) le long de l'axe longitudinal (LA).

12. Tige de selle télescopique selon l'une des revendications 1 à 11, **caractérisée en ce que** par un moyen de fixation (70) une section de fixation (BA) de l'accumulateur de force (69) peut être reliée au tube de selle (SR) d'un cadre de bicyclette (FR), dans laquelle l'élément télescopique (3) est relié à la tige de piston (31) de l'accumulateur de force (69), dans laquelle en position de montage de la tige de selle (100) télescopique dans le cadre de bicyclette (FR) le segment télescopique (3) dépasse de manière réglable de l'extrémité supérieure (OE) du tube de selle (SR) le long d'un axe longitudinal (LA), dans laquelle dans la position de montage une selle de bicyclette peut être fixée à l'extrémité supérieure (OE) du segment télescopique (3).

13. Tige de selle télescopique selon la revendication 12, **caractérisée en ce qu'**un élément d'actionnement (63) est prévu, par lequel peut être réglé(e) ou peuvent être réglés une hauteur maximale (Hmax) de l'extrémité supérieure (OE) du segment télescopique (3) par rapport au cadre de bicyclette (FR) et/ou par l'élément d'actionnement (63) le levage du système (Hsys) entre la position la plus basse de l'extrémité supérieure du segment télescopique (3) et la position la plus haute de l'extrémité supérieure du segment télescopique (3) par rapport au cadre de bicyclette (FR).

14. Bicyclette (FR) avec une tige de selle télescopique selon l'une des revendications 1 à 13.
